# EUROPEAN PATENT APPLICATION

(11) **EP 3 296 863 A1**
(43) Date of publication of application: **21.03.2018**
(21) Application number: 16197074.4
(22) Date of filing: 03.11.2016
(51) Int. Cl.: G06F 9/44

(54) **STORING AND RETRIEVING DOCUMENTATION**

(30) Priority: 20.09.2016 EP 16189600
(71) Applicant: Siemens Aktiengesellschaft, 80333 München (DE)
(72) Inventor: CEVASCO, Fabio, 16129 Genova (IT)
(74) Representative: Maier, Daniel Oliver

(57) **Abstract**

A method for storing and retrieving MES or MOM related documentation, is described comprising:
converting pre-generated documentation (40) into an unified documentation format (UDOC) by a suitable converter (41) to generate a converted documentation;
storing the converted documentation into a suitable database (43) by a suitable administration tool (42). A software capable of performing the method is also disclosed.

## Description

The invention relates to a method for storing and retrieving documentation, in particular technical documentation to be delivered with a software product in the field of a Manufacturing Execution System (MES) or Manufacturing Operation Management (MOM). Most recently, the term MOM is more and more used to replace the term MES.

As defined by the Manufacturing Enterprise Solutions Association (MESA International), a MES/MOM system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

The functions that MES/MOM systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES/MOM products under its SIMATIC IT® product family.

Technical Documentation is typically part of the deliverables of a software product, and is generally provided either online, e.g. technical support sites, or offline, often in the form of deliverable files ("documents") in different formats that are distributed along with the product.

The latter way to operate, becomes often necessary, in particular when no direct access to internet is available or appropriate for safety reasons, e.g. operators working in a plant or on a network with safety restrictions. For this reason, especially in case of a complex products such as an MES/MOM (Manufacturing Execution System / Manufacturing Operations Management) Software Suite, documentation often comprises an amount of documents delivered in PDF format ("manuals") or CHM format ("online helps"), which provide some advantages, such as portability, limited viewing requirements, in particular possible with commonly available software.

That way of delivering information, however, shows several drawbacks, negatively affecting the ease of retrieving information by the user of the product.

Information is often scattered in different documents. For example, to install and configure a software product, the user must commonly read documents such as the Release Notes, the Prerequisites Manual, the Installation Manual, the Configuration Manual and, possibly, further documentation such as a Security Manual.

It is often impossible to cross-link from a document to another, this happens with PDF documents, while other formats, such as CHM online helps, the dependency on files stored in a particular folder, hinders the portability of the documentation.

Cross documents searches are often impossible and, even by searching through multiple merged CHM helps, this operation is often error-prone.

A further problem is due to the requirements of user interfaces (UI), whose integration with usual PDF or CHM documents is uneasy. In particular web-based interfaces, nowadays commonly delivered with software products, require HTML format for the documents to be accessed, often with peculiar features regarding style and presentation. Disadvantages are also often encountered when generating the documents.

Reference documentation of APIs (Application programming interface) is often authored manually instead of being generated automatically and managed together with the corresponding source code. This could cause frequent misalignments between documentation and source code. The focus of documentation is often on software modules rather than users and their activities, with a consequent increase in the number of documents (one or more documents per software module).

Several different vendors have tried to solve the above mentioned problems, but typically they require some particular platform or software to be used in conjunction of the product.

Since early versions of Microsoft Windows, the CHM (Compiled HTML) format has been used as the de-facto standard for helps. Microsoft provided APIs able to open CHM files on specified pages. Unfortunately the format is totally unsuitable for integration with Web UIs (User interfaces). For software based on the Java Runtime Environment, IBM and other vendor advocated the production of documentation according to a specific format ("Eclipse Help"), which could be easily integrated with both desktop and web apps. Additionally, a built-in web application is distributed along with the Eclipse IDE, and can be configured and customized to create "Information Centers". While Eclipse Information Centers do provide a way to manage web-based documentation locally, and provide integrated cross-document search, they are not adapted to the user experience delivered by different product, and the customizations that can be performed in terms of stylesheets are fairly limited (most notably they do not support mobile devices).

Software vendors specialized in content management currently provide more flexible solutions for both the production and the delivery of documentation. Most notably, Atlassian provides the Confluence platform, which can be used to author and deliver web based documentation and can also be extended with several add-ons that provide additional functionalities.

Furthermore, recent versions of the platform provide an HTTP REST API that can be used to manage contents and provides some degree of searchability and queryability, although remaining still rather complex to use and largely exposing a proprietary content model which may not be suitable for integration in certain scenarios (e.g. it has a notion of "page" and "space" as a collection of pages, but no concept of "document" as a hierarchical aggregation of pages).

A number of proprietary, online-only solutions exist to deliver documentation enhanced with cross-document full-text search, such as the Microsoft Developers Network (MSDN). Often, such solutions are proprietary and online only, and cannot be easily extended or adopted for other uses/products.

For what concerns more "consumer-oriented" applications, the Dash application (compatible with Apple OSX and iOS platform) provides a way to aggregate heterogeneous documentation into a single user interface, which provides limited search functionality and easy access to documentation contents. In this specific case, the styles of the original documentation sources are preserved.

The problems mentioned above have now been solved by a method for storing and retrieving MES or MOM related documentation, comprising:
converting pre-generated documentation into an unified documentation format by a suitable converter to generate a converted documentation;
storing the converted documentation into a suitable database by a suitable administration tool.
According to an embodiment of the invention the method further comprises: reading contents from the database by a suitable documentation center service in order to generate output information, which can be processed by an user interface.

According to a further embodiment of the invention, the documentation center service operates on the basis of instructions entered by a user, via an user interface, in particular the same user interface capable of processing the output information.

The pre-generated documentation may be in any format (e.g. PDF, CHM) and may comprise textual documents, images, videos or any other kind of document, and can be generated by known means.

For "documentation" it is intended any kind of electronic document, in an appropriate format.

The converter, administration tool, and user interface are computer programs capable of performing the mentioned operations when run on a suitable electronic device. The database is documentation in the mentioned format and can be stored on any suitable electronic memory.

The invention also relates to a software product comprising: a converter, capable of converting documentation into an unified documentation format to generate a converted documentation;
an administration tool capable of storing the converted documentation into a suitable database.
According to an embodiment, the product comprises a documentation center service capable of retrieving and reading the converted documentation and generating output information.

According to a further embodiment, the product further comprises a user interface, capable of commanding the documentation center and displaying the output information in a suitable way by means of appropriate I/O means.

The invention will now be better illustrated with the aid of the appended figures, of which:
- Figure 1: shows a schematic diagram of a documentation model for the converted documentation;
- Figure 2: shows a flow diagram of an example of a conversion process into an unified documentation format (UDOC);

Figure 3 shows a diagram of a software architecture to perform a method according to the invention.

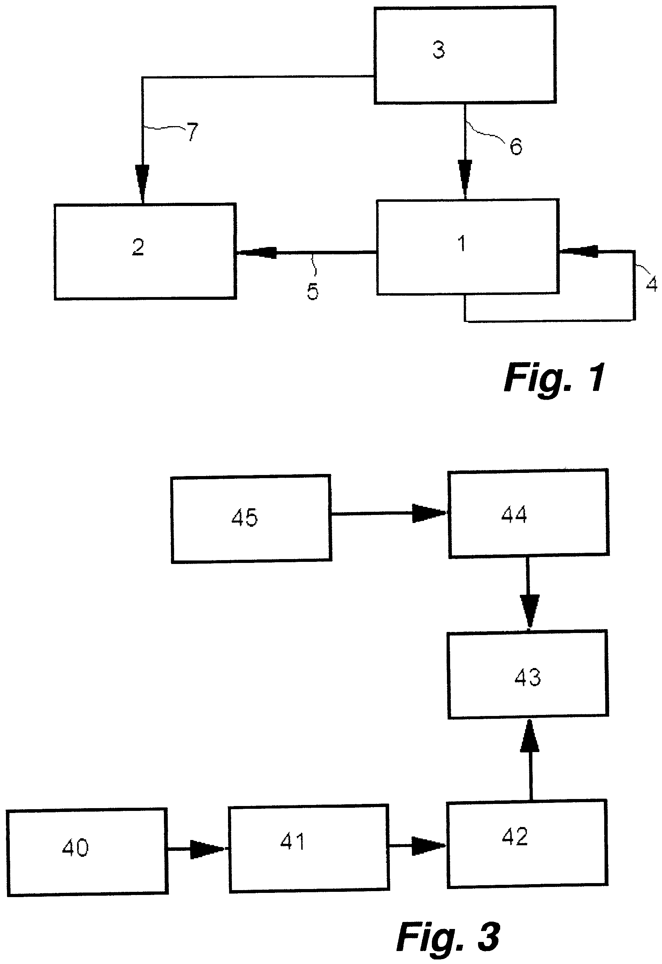

With regard to the unified documentation format, it preferably allows to structure the documentation according to a common data model, which is represented in figure 1.

The simple data model allows a quick and safe management of the stored data. Accordingly, documentation is classified into three different types of entities:
Documentation Page, indicated with reference 1 in the figure is the smallest unit of self-contained information. As shown by the diagram, pages can reference assets (arrow 5), are contained in Documents, and may reference other pages (arrow 4) .
Documentation Assets, reference 2 - pictures, videos, and other types of media that can be considered accessory to documentation content.
Document, reference 3 - A composition of Pages and Assets.
In order to achieve the above data structure, it is used an unified documentation information format (UDOC in the following text) which, when necessary, provides the semantic and structural information.

According to a preferred way to proceed, different documentation formats are converted by suitable converters into this UDOC. Then, by a single documentation center tool the information in this format can be stored into a suitable database.

As an example, the UDOC enables to store documentation contents (pages) in separate, semantic files, in particular HTML files, where page metadata are also stored appropriately, while the assets are stored only into a designated folder.

Then document structure and metadata are stored into a simple page, in particular an HTML page.

Therefore an UDOC document or file, has the structure of a folder comprising:
an asset folder 2 containing all images, videos and other media;
a content folder 1 containing pages, in particular in HTML format; every page must be uniquely identifiable and preferably contains only semantic markup; they can contain the appropriate page metadata as well as possible reference paths to other pages or to assets;
an index file, in particular a page in HTML containing the document structure (e.g. a nested list) and document metadata, thus referencing both the pages of content folder 1 (arrow 6) and the assets of the asset folder (arrow 7). A UDOC compliant page and a UDOC compliant index suitable for a document as described above are given, as an example in following table 1 and table 2, respectively.

**Table 1: UDOC compliant page**

| |
|---|
| ```
  <html>
   <head>
    <meta name="udoc:page_title" content="Post-Installation Procedures">
    <meta name="udoc:document_id" content="SIMATICITUA_InstallationGuide">
    <meta name="udoc:document_title" content="Installation Guide">
    <meta name="udoc:product_version" content="SIMATICITUAF-1.2.0.0">
    <meta name="udoc:category" content="Installation, Configuration">
    <meta name="udoc:document_summary" content="Provides detailed information on how to install
  and configure SIMATIC IT Unified Architecture Foundation.">
    <meta name="udoc:audience" content="System Integrator, Commissioning Engineer, Support
  Engineer, Project Engineer">
    <meta name="udoc:revision" content="A5E35814728-AC">
    <meta name="udoc:state" content="Published">
    <meta name="udoc:author" content="Siemens AG">
    <meta name="udoc:language" content="en-US">
    <meta name="udoc:page_id" content="SIMATICITUA_InstallationGuide_Post-
  Installation_Procedures">
    <link href="../assets/style.css" rel="stylesheet">
   </head>
   <body>
    <header>
      <hl>Post-Installation Procedures </h1>i
    </header>
    <p>After installing <a class="document-link " href="Installation_Procedure.html">SIMATIC IT
  Unified Architecture Foundation</a> (including User Management Component and Security
  Control), you must perform the following post-installation steps: </p> <ol class=" ">
      <li class=" "> <p>
      <a class="document-link " href="Security_Configuration.html">Configure security</a> (i.e.
  create Windows users, import them in UMC component and create the required grants on the
  database instances for these users). </p>
      </li><li class=" "> <p>
      <a class="document-link " href="System_Configuration.html">Configure the system</a>
  (select the interactive user and create the system required databases). </p>
      </li><li class=" "> <p>
      <a class="document-link " href="Documentation_Center_Configuration.html">Upload documents
  to the documentation center</a>. </p>
      </li>
    </ol>
   </body>
   </html>
``` |

The document is preferably compressed in a suitable way (e.g. zipped). It may, if found appropriate, have a specific extension, in order to be recognized and managed appropriately by the computer programs.

According to a further preferred embodiment, the name of the UDOC document is determined in a way to allow a precise and unambiguous identification, and can be based on its metadata (e.g. Product/Product Option + Document ID).

In order to convert the documentation generated in different formats into the UDOC, suitable converters can be used. The conversion is rather simple if the start format is HTML based.

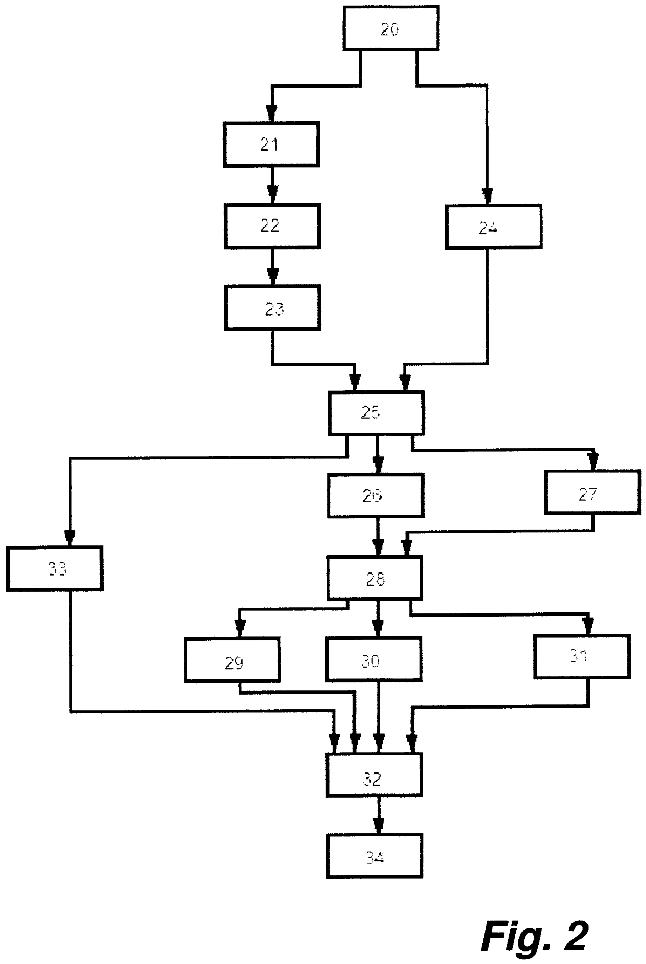

As an example, with reference to figure 2, an activity diagram is illustrated for converting to convert an EclipseHelp document into UDOC.

The files at the start point 20, are processed by the following steps. A step of decompressing JAR format files 21, then a parse to xml files 22 and parse page content. In parallel with those steps, optional metadata are parsed 24, thus ending to a first common end point 25.

Then the page paths are flattened 26, while metadata are processed 27 to a second end point 28. Then, in parallel follow the steps of creating an index file 29, rewriting links and/or references 30 and create page files 31, to a third common end point 32. From common end points 25 and 32 and in parallel to the other steps, a step of flattening asset paths 33 can be performed. Then the data can be converted in an UDOC file 34 as above described. Other formats can be converted by suitable operational schemes.

With reference to figure 3, after conversion of the documents generated in other formats 40 by converters 41, one or more utilities, called documentation administration tools 42, are necessary to process UDOC files and store them into a relational database or NoSQL data store or a database with any suitable architecture 43. This process is rather simple due to the characteristics.
Once the documentation contents are stored homogeneously in a common data store, a suitable application or set of applications, called documentation center service 44 can be used to query them. It preferably comprises a set of application programming interfaces (API) which can be activated by the user, in particular by a user interface 45. This documentation center service can be compliant with appropriate protocols, in order to provide ease in formulating queries and in searching. Preferably, it is compliant with the OData 4.0 protocol. By way of example, the following query:
"https://doccenter/svc/odata/Page?$search=installation%20proc edure&$top=2&$select=Id,Audience,Category,DocumentTitle,Title ,HighlightedText",query which searches for the top 2 pages matching the search "installation procedure", displaying only the Id, Audience, Category, Document Title, Page Title, and Highlighted Text, would generate a response such as that reported in following table 3.

**Table 3: example of response by documentation center service to a query**

| |
|---|
| ```
  {
    "@odata.context":"http://doccenter/svc/odata/$metadata#Page",
    "value":[
      {
        "Id":"SIMATICITUAF_1.1.0.0_SIMATICITUA_InstallationGuide_Post-
  Installation_Procedures",
        "Audience":"System Integrator, Commissioning Engineer, Support Engineer, Project
  Engineer",
        "Category":"Installation",
        "DocumentTitle":"Installation Guide",
        "Title":"Post-Installation Procedures",
        "HighlightedText":"Post-<strong class='search-highlight'>Installation</strong> <strong
  class='search-highlight'>Procedures</strong>"
      }.
      {
        "Id":"SIMATICITUAF_1.1.0.0_SIMATICITUA_InstallationGuide-SQL_Express_Installation",
        "Audience":"System Integrator, Commissioning Engineer, Support Engineer, Project
  Engineer",
        "Category":"Installation",
        "DocumentId":"SIMATICITUAF_1.1.0.0_SIMATICITUA_InstallationGuide",
        "DocumentTitle":"Installation Guide",
        "Title":"SQL Express Installation",
        "HighlightedText":"<strong>…</strong>meant to be a step-by-step <strong
  class='search-highlight'>installation</strong> reference. During
  SQL Express <strong class='search-highlight'>installation</strong> you must not change the
  default instance. Select New SQL Server stand-alone <strong
  class='search-highlight'>installation</strong>.
  Select Perform a new intallation of SQL Server 2014.
  Unselect SQL Server Replication Leave
  the default named instance. Leave the
  defaults on both tabs.
  Select Mixed Mode, enter a Windows administrative password and complete the <strong
  class='search-highlight'>installation</strong> <strong class='search-
  highlight'>procedure</strong>."
      }
    ]
  }
``` |

The user interface can provide in particular provide the user's prompts, capable of receiving inputs from the user, query the documentation center by means of the API's and receive output information, providing it with styles and format and exposing it to the user by means of common I/O units.

According to a preferred embodiment, the information regarding how to format the information delivered to the user is substantially completely provided by the user interface, while the UDOC contains, as far as possible only metadata capable of identifying the page, identifying the content (such as keywords, hashtags or the like), and the content text itself, so that the documentation center service can operate any kind of appropriate searches, while keeping the format as simple as possible in order to allow to easily develop the software capable of storing, querying and retrieving the information contained in the stored documents, without that the latter software has the need to be able to process unnecessary information.

The method and product according to the invention provides a simple and extensible data model for documentation content in the form of a common documentation format based on widespread standards (HTML5) and provides a simple way to migrate existing contents - once a document is converted into UDOC format, it can be easily managed. Due to its minimal markup, is suitable for embedding in any software product able to display HTML data, and allows to develop a very flexible HTTP API able to support complex queries, search, and aggregation based on user-defined metadata.

This further allows to use built user interfaces independently from documentation contents, and consume documentation data as required, permits the integration of different documentation, e.g. on a complex industrial plant. The applications for searching the documentation can easily perform full text searches reducing the time to find information. The whole method and product can easily either provided centrally in a plant or facility and even online, but can also be easily installed on local machines, with full functionality, thus solving one of the above delineated problems of the known art.

### List of reference signs:

- 1: Documentation page/content folder
- 2: Documentation asset/asset folder
- 3: Document
- 4: Page to page reference
- 5: Page to asset reference
- 6: Index to page reference
- 7: Index to asset reference
- 20: Start point
- 21: Decompression JAR files
- 22: Parse to .xml files
- 23: Parse page content
- 24: Parse optional metadata
- 25: First common end point
- 26: Flatten page paths
- 27: Process metadata
- 28: Second common end point
- 29: Create index file
- 30: Rewrite links/references
- 31: Create page files
- 32: Third common end point
- 33: Flatten asset paths
- 34: Create UDOC file.
- 40: Pre-generated documents
- 41: Documentation converters
- 42: Documentation administration tools
- 43: Database
- 44: Documentation center service
- 45: User interface

## Claims

1. Method for storing and retrieving documentation relating to a manufacturing execution system (MES)or a manufacturing operation management (MOM), said method comprising:
converting pre-generated documentation (40) into an unified documentation format (UDOC) by a suitable converter (41) to generate a converted documentation;
storing the converted documentation into a suitable database (43) by a suitable administration tool (42).

2. Method according to any of the preceding claims, further comprising reading contents from the database by a suitable documentation center service (44) in order to generate output information processable by an user interface (45).

3. Method according to any of the preceding claims, wherein the unified documentation format (UDOC) is an HTML compliant format, in particular HTML5.

4. Method according to any of the preceding claims, wherein the converted documentation is organised in one or more documents (3) each comprising:
an asset folder (2) containing images, videos and other media;
a content folder (1) containing pages, in particular pages containing only semantic markup;
an index file, in particular a page in HTML corresponding to the document structure, in particular in the form of a nested list and document metadata.

5. Method according to claim 4, wherein the pages contain links to other pages (4) and/or to assets (6).

6. Method according to claim 4 or 5, wherein the documents are compressed.

7. Method according to any of claims 2 to 6, wherein the documentation center service (44) is able to operate on the basis of instructions entered by a user, via an user interface (45), in particular the same user interface capable of processing the output information.

8. Software product comprising a converter (41), capable of converting documentation (40)relating to a MES or MOM into an unified documentation format to generate a converted documentation into an unified documentation format;
an administration tool capable (42) of storing the converted documentation into a suitable database (43).

9. Software product according to claim 8 adapted to perform a method according to any of claims 1 to 7.

10. Software product according to claim 8 or 9 comprising a documentation center service (44) capable of retrieving and reading the converted documentation and generating output information.

11. Software product according to any of claims 8 to 10 comprising a user interface (45), capable of commanding the documentation center (44) and displaying the output information in a suitable way by means of appropriate I/O means.
